Europäisches Patentamt

European Patent Office

Office européen des brevets

(19)

(11) Publication number: **0 518 336 A1**

# EUROPEAN PATENT APPLICATION

(12)

(21) Application number: **92109864.6**

(22) Date of filing: **11.06.92**

(51) Int. Cl.⁵: **C09K 3/32**, C02F 1/68, B01D 17/02

(30) Priority: **14.06.91 US 715558**
**26.05.92 US 886051**

(43) Date of publication of application:
**16.12.92 Bulletin 92/51**

(84) Designated Contracting States:
**AT BE CH DE DK ES FR GB GR IT LI LU MC NL PT SE**

(71) Applicant: **MICRO ENVIRONMENTAL, INC.**
**3611 Three Mile Road, N.W.**

**Grand Rapids, Michigan 49504(US)**

(72) Inventor: **Blystra, Calvin D.**
**8219 Atlanta Court, N.E.**
**Rockford, Michigan 49341-9306(US)**

(74) Representative: **Schaumburg, Thoenes & Englaender**
**Mauerkircherstrasse 31**
**W-8000 München 80(DE)**

(54) **Recovery of organic liquid spills.**

(57) A process for removing organic liquid contaminants from an aqueous solution in which the contaminants are entrained comprises passing the solution through a contacting zone containing a fixed bed of a particulate thermoplastic elastomeric block copolymer selected from the group consisting of monovinyl aromatic-conjugated diene block copolymers, monovinyl aromatic-monoolefin block copolymers, and hydrogenated derivatives of such block copolymers; and recovering a substantially oil-free aqueous stream from the contacting zone. A method for removing hydrocarbon contaminants from soil comprises contacting hydrocarbon-contaminated soil with the above block copolymer and forming a homogeneous mixture of the block copolymer and the hydrocarbon-contaminated soil, contacting the homogeneous mixture with water, recovering block copolymer-encapsulated hydrocarbon contaminant from the homogeneous mixture, and recovering contaminant-free soil from the remaining mixture. A method for recovering an organic liquid film from a liquid body or solid surface comprises uniformly distributing the above block copolymer over the organic liquid film to encapsulate the liquid film in the block copolymer, and recovering organic liquid-encapsulated block copolymer from the solid surface.

FIG. 1

## BACKGROUND OF THE INVENTION

### Field of the Invention

This invention relates to the recovery of organic liquids and petroleum-based products, including crude oil and refined petroleum fractions from bodies of water, soil, aqueous streams, bilges of ships, and solid surfaces, such as garage and shop floors, steel decking and the like.

### Description of the Related Art

Pollution of oceans, rivers, lakes, aquifers, and the like, by oil spills, aqueous waste materials and the like is a problem which requires immediate attention. Contamination of ground water and other aqueous streams is also a modern industrial problem.

The problem is not new, nor is the concern to find solutions to clean up and contain not only major disasters such as the spilling, deliberate or accidental, of millions of gallons of crude oil in the oceans, harbors and other waterways of the world, but also minor spills in industrial plants and the home, such as on shop and garage floors. Further, contamination of soils with petroleum products and other organic liquid contaminants has become one of the major threats to groundwater quality in the United States. Methods and compositions for controlling, reducing and eliminating the menace of large and small scale polluting have been and are actively sought because of their importance to civilization today and in the future.

Various techniques have been proposed for treating spillage of petroleum-based contaminants. Various materials have been suggested as absorbents for oil spills, including large quantities of straw, clay, silica or kieselguhr particles. It has also been proposed to employ foamed polymeric materials such as porous polystyrene particles and porous polyethylene fluffs, either alone or in combination with other additives such as solid inorganic fillers.

US-A 3,518,183 discloses contacting oil slicks and oil spills at the water surface by applying a large surface area of a monovinyl arene-conjugated diene block copolymer to the oil, absorbing oil into the block copolymer and separating the oil-impregnated block copolymer from the water. The block copolymer can be incorporated into a tubular net in the form of a collar surrounding an off-shore drilling platform. The block copolymer can also be incorporated into booms or dikes to prevent the migration of an oil slick into the mouth of a harbor or along sections of coast line.

US-A 4,941,978 discloses treating an oil spill on a body of water with a granular elastomeric composition comprising a block copolymer of styrene and an ethylene/butylene copolymer elastomer.

The above patents are generally directed to the recovery of an oil which is not entrained with water but lying on top of the surface of the water. Some patents have addressed the separate problem of treating finely dispersed or entrained particles of oil in water, or emulsions of oil in water. It is well known that when very small oil droplets are entrained in water, thereby forming suspended and/or emulsified liquid immiscible materials, separation of the oil droplets by gravity is extremely slow and that some form of treatment may be required to effect an essentially complete separation.

For example, the majority of crude oils, as well as some fuel oils, form a relatively stable, viscous water-in-oil emulsion, when spilled on water. The rate of formation and physical characteristics of such an emulsion are dependent upon the intensity and duration of agitation. Once formed, emulsions are difficult to recover and handle. These viscous water-in-oil emulsions are difficult to recover from the surface of the water on which they float or from surfaces such as beaches onto which they can be washed.

US-A 4,420,573 discloses a method of treating saltwater-in-oil dispersions comprising mixing with the dispersion a rubber latex which has a high wet gel strength, such as a styrene butadiene rubber latex. The latex has a high solid content, such as a 40 to 60% by weight solid concentration. This treatment method, however, is only useful in treating water-in-oil dispersions comprising oil as the continuous phase and water as the dispersed phase, the water being present in an amount of 20 to 80% by volume.

US-A 3,215,623 relates to a process for removing immiscible liquid oil contaminants from an aqueous solution of a copper ammonium salt in which the contaminant is entrained. The process comprises the steps of passing the solution through a fixed bed of a porous, granular, precipitated polymer of a 1-olefin containing from 2 to 8 carbon atoms per molecule, adsorbing the contaminant on the polymer, and recovering a substantially oil-free copper ammonium salt solution from the contacting zone of the fixed bed. Alternatively, the polymer can be slurried into the aqueous solution where the contaminant can be adsorbed on the polymer, passing the slurry from the contacting zone to a polymer separation zone to permit the liquid contaminant-encapsulated polymer to rise to the top of the liquid in the separation zone and be skimmed therefrom to thereby recover a substantially oil-free copper ammonium salt solution from the separation zone.

US-A 3,948,770 discloses a process for rapidly separating fine oil droplets dispersed in sea water comprising the steps of adding to the sea water a flocculent mixture comprising montmorillonite clay and an anionic copolymer of acrylamide, the mixture contacting the oil droplets for accumulating and agglomerating the oil droplets to assist in their separation from the water, and permitting the accumulated and agglomerated oil droplets to settle substantially to the surface of the water.

US-A 2,367,384 discloses a process for selectively removing small immiscible amounts of organic oily impurities from water comprising contacting the contaminated water with an inert solid material having a relatively large surface and having deposited thereon a cation surface active bonding agent, and separating the water from the solid.

US-A 3,265,616 discloses a method for collecting a patch of oil from the surface of an area of water. The oil patch is sprayed with a rubber latex comprising 5 to 25 percent of rubber. On contact with the oil layer, the rubber in the latex, helped to a certain extent by the emulsifiers present, absorbs the oil. The rubber latex can comprise a styrene-butadiene rubber prepared synthetically in an aqueous emulsion. The emulsifiers present are those required for latex manufacture, such as fatty acid soaps and rosin acid soaps.

Several methods have previously been used to treat soils which have been contaminated with organic liquids. Some methods involve in situ treatment of the contaminated soil, but these methods may not always be effective. The most common method is excavation in which all of the contaminated soil is removed and eventually replaced with fresh earth. While replacing the contaminated soil with fresh soil can be effective, it would be beneficial in many cases to merely treat the excavated soil to remove the contaminants and then return the treated soil to the excavation site. Further, even if the contaminated soil is replaced with fresh soil, the contaminated soil typically still needs to be treated in some manner to remove the contaminants.

US-A 3,494,862 relates to a method for recovering liquid hydrocarbons, such as oil, from solid surfaces such as machine shop floors by contacting the liquid hydrocarbons with a porous polystyrene which completely absorbs the hydrocarbons and then sweeping up the liquid hydrocarbon-encapsulated polystyrene.

## SUMMARY OF THE INVENTION

It has been discovered that by coating thermoplastic rubbers selected from the group consisting of monovinyl arene-conjugated diene block copolymers, monovinyl arene-monoolefin block copolymers and hydrogenated derivatives of such block copolymers with minor amounts of hydrophobic silica, oil spill absorption time can be dramatically reduced and the quantity of polymer required can be dramatically reduced. In accordance with the invention, the hydrocarbon spillage is contacted with the compositions of the invention to encapsulate the hydrocarbons. In a case where the spillage is a crude oil or refined petroleum product spill on water, the invention compositions containing the encapsulated oil float on top of the water and can be easily scooped up and recovered. Where the spill is on a solid surface, such as a garage floor, the invention compositions encapsulate the spilled liquid and can be easily swept up, leaving little, if any, trace of the spilled liquid.

In one of its aspects, the invention relates to a process for removing organic liquid contaminant from an aqueous solution in which the contaminant is entrained which comprises passing the solution through a contacting zone containing a fixed bed of a particulate thermoplastic elastomeric block copolymer. The thermoplastic elastomeric copolymer comprises a linear diblock copolymer, triblock copolymer or branched diblock copolymer. Further, the particulate thermoplastic elastomeric block copolymer comprises a monovinyl aromatic polymer block joined to an elastomeric conjugated diene polymer block or a monovinyl aromatic polymer block joined to an elastomeric monoolefinic polymer block. After passing the solution through the fixed bed of particulate block copolymer, a substantially contaminant-free aqueous stream is recovered from the contacting zone. If desired, the solution can be treated with one or more of ozone, ultraviolet radiation and activated carbon and/or passed through an air stripper.

The elastomeric polymer block and/or the monovinyl aromatic polymer block can be partially or completely hydrogenated. Preferably, the thermoplastic elastomeric copolymer comprises a polystyrene-polybutadiene-polystyrene block copolymer or a polystyrene-ethylene/butylene copolymer-polystyrene block copolymer.

The invention also relates to a method for removing an organic liquid contaminant from soil comprising the steps of combining the organic liquid-contaminated soil with one of the above thermoplastic elastomeric block copolymers. Next, the organic liquid-contaminated soil and the thermoplastic elastomeric copolymer are mixed to form a homogeneous mixture of the thermoplastic elastomeric copolymer and the organic liquid-contaminated soil. The homogeneous mixture is then mixed with water, a copolymer-encapsulated organic liquid contaminant is recovered from the homogeneous mixture, and a contaminant-free soil is recovered from the remaining mixture.

In one aspect of the invention, the contaminated soil can be first washed with water, preferably under pressure, and the water extract can then be treated in the process described above by passing the contaminated liquid through a contacting zone containing a fixed bed of a particulate thermoplastic elastomeric block copolymer.

If desired, the copolymer-encapsulated organic liquid contaminant can be dissolved in an organic solvent such as petroleum naphtha, gasoline, diesel fuel or fresh crude oil to form an organic liquid contaminant-elastomer-petroleum liquid composition after recovery from the homogeneous mixture and the resulting liquid composition can be employed as a fuel for furnaces, engines and the like. Also, the organic liquid-contaminated soil is typically excavated prior to the step of combining the soil with the thermoplastic elastomeric block copolymer.

The invention also relates to a method for recovering an organic liquid film from a solid surface comprising the steps of uniformly distributing the above thermoplastic elastomeric block copolymer over the organic liquid film, and recovering organic liquid-encapsulated copolymer from the solid surface. The amount of block copolymer applied typically ranges from about 0.1 to about 1 pounds per gallon of the organic liquid depending on the surface area of the spill and the viscosity of the organic liquid and the length of time in which organic liquid is on the medium. For example, the larger the surface area, the more viscous the organic liquid, and the longer the organic liquid has been on the medium, the more polymer that will be needed to encapsulate the organic liquid.

In yet another of its aspects, the invention relates to a method for utilizing hydrocarbon fluid which has been recovered from water by encapsulating the hydrocarbon fluid with one of the above thermoplastic elastomeric block copolymers. The method includes the step of dissolving the thermoplastic rubber-encapsulated hydrocarbon fluid in a solvent such as petroleum naphtha, gasoline, diesel fuel and crude oil to form a thermoplastic rubber-hydrocarbon fluid-petroleum liquid composition adapted for use as a fuel for furnaces, engines and the like. Thus, the method can also include the step of burning the thermoplastic rubber-hydrocarbon fluid-petroleum liquid composition in a furnace. Preferably, the solvent is heated during the dissolving step to promote the dissolution of the thermoplastic rubber-encapsulated hydrocarbon fluid in the solvent.

The invention further relates to a method for removing an organic liquid contaminant from soil wherein the organic liquid-contaminated soil is thoroughly mixed with water to leach the organic liquid contaminant from the soil and to obtain a soil/liquid mixture. The soil/liquid mixture is then filtered to obtain a washed soil and an aqueous filtrate comprising organic liquid contaminants. Next, the aqueous filtrate is directed through a contacting zone containing a fixed bed of one of the above thermoplastic elastomeric block copolymers in particulate form, and a substantially contaminant-free aqueous stream is recovered from the contacting zone.

The invention further relates to a method for preventing organic contaminants from leaching from an underground fuel tank into an existing soil beneath the fuel tank. The method includes the steps of mixing a first quantity of soil and one of the above thermoplastic elastomeric block copolymers to form a soil/block copolymer mixture, placing the soil/block copolymer mixture at the bottom of an excavated hole in an existing soil, positioning an underground fuel tank above the soil/block copolymer mixture, and filling in the excavated hole with a second quantity of soil. The soil/block copolymer mixture sorbs any fluids which leak from the fuel tank and which migrate downwardly to thereby prevent the fluids from leaching into the existing soil.

The invention also relates to a method for preventing organic contaminants which leak or spill from a wellhead of an oil well from leaching into an existing soil around the wellhead. In this method, a first quantity of soil and one of the above thermoplastic elastomeric block copolymers are mixed to form a soil/block copolymer mixture, and the soil/block copolymer mixture is placed on the ground around the wellhead. The soil/block copolymer mixture sorbs organic contaminants which leak or spill from the wellhead to prevent the organic contaminants from leaching into the existing soil around the wellhead.

BRIEF DESCRIPTION OF THE DRAWINGS

FIG. 1 is a schematic diagram of a bilge filtration system equipped with parallel copolymer treatment units containing thermoplastic elastomeric block copolymer particles for the purpose of removing entrained hydrocarbon contaminants from an aqueous stream according to the invention;

FIG. 2 is a flow chart diagram of a combination type treatment system comprising a copolymer treatment unit, an air stripper unit, an ozone treatment unit, an ultraviolet (UV) radiation treatment unit and an activated carbon treatment unit;

FIG. 3 is a flow chart diagram showing the steps of a process for recovering organic liquids from soil according to the invention;

FIG. 4 is a sectional view of an underground fuel tank placed above a soil/block copolymer mixture; and

FIG. 5 is a perspective view of a wellhead for an oil production well surrounded by a ring of a soil/block copolymer mixture.

## DETAILED DESCRIPTION OF THE PREFERRED EMBODIMENTS

The compositions used in the present invention comprise a thermoplastic elastomeric copolymer. The thermoplastic elastomeric copolymers employed in the practice of this invention comprise block polymer segments of vinyl aromatic monomers and conjugated dienes having at least one monovinyl aromatic polymer block joined to a conjugated diene polymer block, or block polymer segments of vinyl aromatic monomers and monoolefinic monomers having at least one monovinyl aromatic polymer block joined to a monoolefinic polymer block, as well as hydrogenated derivatives of these block copolymers. Each polymer block or block segment can comprise 100 or more individual monomer units joined together.

More particularly, the block copolymers used in the present invention are thermoplastic elastomeric linear diblock, triblock, or branched (radial) diblock copolymers comprising monovinyl aromatic polymer blocks joined to elastomeric conjugated diene or elastomeric monoolefinic polymer blocks, and including hydrogenated derivatives of such polymer blocks. The general structure of the thermoplastic elastomeric block copolymers can be of the linear A-B-A triblock type, radial or branched A-B diblock type, and linear A-B diblock type. In these formulas, the "A" represents a monovinyl aromatic polymer block which can be partially or completely hydrogenated, while "B" represents an elastomeric conjugated diene, hydrogenated diene, monoolefin or hydrogenated monoolefin polymer block.

The A-B-A triblock structure has the elastomeric polymer block B as a midblock and the polymer blocks A as endblocks. The radial or branched A-B diblock copolymers comprise a plurality of A polymer blocks joined together at respective first ends to form a common hub. The A polymer blocks include respective second ends which extend radially outwardly from the common hub in different directions. Each of the second ends is linked to a B polymer block which generally extends further radially outwardly of the common hub.

The monovinyl aromatic polymer blocks comprise either homopolymer or copolymer blocks and generally predominate in a monovinyl aromatic monomer as a major polymerizable unit. The conjugated diene and hydrogenated diene polymer blocks and the monoolefin and hydrogenated monoolefin polymer blocks may be either homopolymeric or copolymeric; the essential characteristic being that they be of such constitution that they are characterized by elastomeric properties.

The blocks "A" and "B" can be partially or completely hydrogenated. If the hydrogenation is carried out to only a partial extent, it is preferred that the blocks "B", namely the conjugated diene polymer blocks, be hydrogenated so as to improve their oxidation resistance. Thus, the polymers can comprise polymer blocks which are not hydrogenated, which are partially hydrogenated, or which are fully hydrogenated.

The monovinyl aromatic monomers which can be employed in forming the thermoplastic elastomeric block copolymers of this invention include styrene, alpha-methyl styrene, and ring-alkylated styrene. These may be polymerized or copolymerized with one another or with minor amounts of a conjugated diene to form the blocks "A". The conjugated dienes which can be utilized in the formation of the blocks "B" or as a minor component in the blocks "A" preferably include conjugated dienes having from 4 to 8 carbon atoms per molecule, especially butadiene and isoprene. The monoolefins which can be utilized in the formation of the blocks "B" preferably have from 2 to 8 carbon atoms, with ethylene, propylene and butylene being preferred. Currently, the preferred monoolefinic "B" blocks comprise copolymers of ethylene/propylene and ethylene/butylene.

Representative thermoplastic elastomeric block copolymers have the configuration polystyrene-polybutadiene-polystyrene, polystyrene-polyisoprene-polystyrene, and polystyrene-poly(ethylene/butylene)-polystyrene A-B-A triblock copolymers; polystyrene-polybutadiene and polystyrene-polyisoprene radial or branched A-B diblock copolymers; and polystyrene-polybutadiene, polystyrene-poly(ethylene/propylene) and polystyrene-poly(ethylene/butylene) linear A-B diblock copolymers. Currently, preferred thermoplastic elastomeric block copolymers are polystyrene-polybutadiene-polystyrene and polystyrene-poly(ethylene/butylene)-polystyrene linear A-B-A triblock copolymers.

Particularly preferred thermoplastic rubbers for use in the present invention are currently available commercially under the trade designations PS 3200 and PS 3400 from Micro Environmental, Inc. of Grand Rapids, Michigan. The PS 3200 product comprises a polystyrene-polybutadiene-polystyrene block copolymer, and the PS 3400 product comprises a polystyrene-poly(ethylene/butylene)-polystyrene block copolymer. The most preferred materials are available from the manufacturer as a particulate substance in either a pellet or a powder form. Currently, it is preferred to employ the powder form because it presents a larger surface area for absorption and/or adsorption ("encapsulation") than is provided by the pellets. Preferably, the thermoplastic elastomeric (rubber) block copolymer particles have a fineness modulus of 100 to 300 microns, with 180 to 220 microns being most preferred.

If desired, the thermoplastic elastomeric copolymer particles can be uniformly coated with minor amounts of a hydrophobic silica. The hydrophobic silica additives which can be used are disclosed in patent and technical literature and are readily available from commercial sources. The hydrophobic silicas can include substantially any siliceous compounds including silica, diatomite, kieselguhr and other forms of diatomaceous earth which have been treated to render the material hydrophobic. Particularly preferred silicas are hydrophobic amorphous fumed silicas available under the trade designations Aerosil R-972, R-972V, R-974, R-974V and R-976 from the Degussa Corporation, Richfield Park, New Jersey. The hydrophobic silica can be employed in amounts of 0.1-2.5 weight percent, most preferably 0.5 weight percent, based on the weight of the thermoplastic elastomeric block copolymer.

The hydrophobic silica can be readily combined with the thermoplastic elastomeric block copolymer by any conventional blending technique which results in the block copolymer receiving a substantially uniform coating of hydrophobic silica on its surface.

The amount of treated block copolymer utilized will depend in part upon the thickness of the oil film to be absorbed, the time needed for economic collection of the oil, the agitation of the body of water from which the oil is to be removed when dealing with an oil slick, and similar physical factors. When the spillage comprises a film of not more than about 0.5 inch in thickness, it is preferred that the finely divided block copolymer be applied in an amount between 3 to 7 pounds per gallon of spill. The time required for encapsulation of the oil by the block copolymer will vary with the temperature, the degree of agitation, the ratio of liquid spill to block copolymer, the viscosity of the liquid and the surface of the block polymer being utilized.

The coated block copolymer encapsulant of the invention begins to encapsulate hydrocarbon spills within seconds following contact of fresh encapsulate with the liquid spill. The overall time required for cleanup of spills of one-half inch or less will usually be measured in minutes. Larger spills, such as those that occur when tankers run aground, will take longer because the continuous presentation of fresh encapsulant surfaces becomes a function of time dependent upon the volume of the spill and the area over which it has spread. Generally it is preferred that treatment of the spill with the invention encapsulants begins within about four hours after the spill has taken place. It will be appreciated that extremely large spills may require more than one treatment of the spill with the compositions of this invention.

Surprisingly, treatment of the block copolymer with even a minor amount of hydrophobic silica (e.g., .1-2.5 volume percent) provides an increase in volumetric pickup from about 3 volumes oil/volume of block copolymer to about 4 volumes oil/volume of block copolymer. In addition, encapsulation of the spilled oil by the treated block copolymers requires approximately 25 percent less time than is required for oil absorption by untreated polymers.

The spilled liquid is substantially completely encapsulated within the body of the treated block copolymer leaving the surface of the block copolymer encapsulant essentially dry and non-toxic. This facilitates the collection of the encapsulated liquid and block copolymer by such means as raking, movement of a boom or net across the surface of the water and the like. Where the spillage is on a solid surface such as steel decking, wood decking, concrete flooring or the like, the encapsulated liquid copolymer can be swept up by a broom or the like.

Application of the invention compositions to the liquid spill may be accomplished by a variety of methods. Preferably, a relatively uniform distribution of the composition over the area of the pollutant or the portion thereof which is being treated is desired. The invention compositions can be broadcast or otherwise distributed over and/or into the spilled liquid. This can be accomplished in a variety of ways. Liquid spills on concrete surfaces and the like can be picked up by manually broadcasting or otherwise spreading the compositions of the invention on the surface of the spill. Small spills on water can be treated from small boats by spraying, blowing or dusting the invention compositions onto the surface of the spillage. On larger spills, it may be necessary for several surface vessels to be employed. In instances where the oil has spread over a wide area, the solid can be readily broadcast over the surface of the oil slick with conventional airplanes. The spillage can be contained from continuing to spread and prevented from contacting shorelines and beaches by employing flow-through booms wherein the encapsulants of this invention are contained in a porous net-like covering. These booms thus allow water to pass through the boom structure but will prevent the passage of oil by encapsulating oil which may pass through the net-like covering.

The compositions of the invention can also be employed in cleaning bilge tanks by dispersing the encapsulants of this invention directly into the bilge tank or by the use of a pillow or bilge bag comprising a closed net fabric which is filled with the porous encapsulant compositions of this invention.

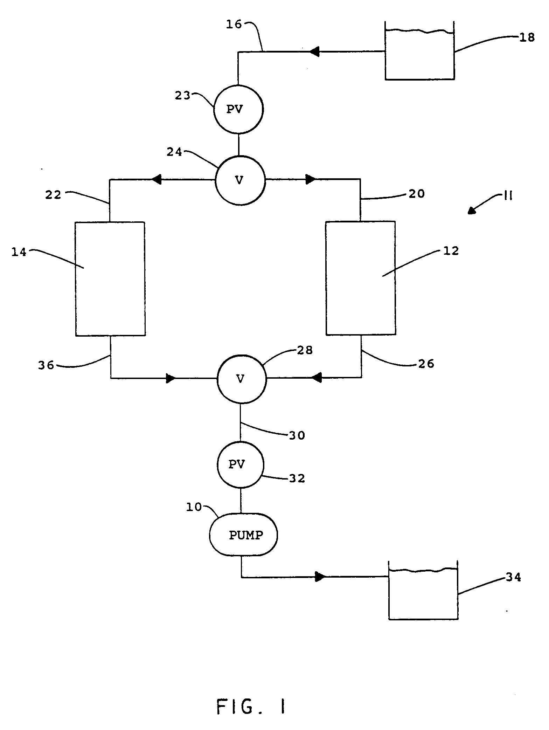

The invention also relates to a process for removing organic liquid contaminants, particularly hydrocarbons, which have become dispersed or entrained in aqueous streams, such as chemical process streams. In the process, an aqueous stream contaminated with organic liquids is directed through a fixed bed of thermoplastic elastomeric copolymer sorbent particles. The aqueous stream which is to be treated can include organic liquid contaminants, e.g., fuels, methyl ethyl ketone, toluene, ethylbenzene, xylene and benzene, and even metals such as iron. For example, referring to FIG. 1, a treatment system for removing entrained organic liquid contaminants from the bilge of a ship comprises a copolymer treatment unit 11 which comprises a bilge pump 10 positioned downstream of two parallel copolymer sorbent beds 12, 14 and connected thereto with appropriate piping. A contaminated organic liquid stream can be pumped from a bilge 18 of a vessel or other reservoir of contaminated liquid into a bilge outlet pipe 16 and directed by a three-way valve 24 into a treatment unit inlet pipe 20 or treatment unit inlet pipe 22. The pressure of the contaminated organic liquid in the bilge outlet pipe 16 can be measured by a pressure gauge 23.

When the three-way valve 24 is directing the contaminated liquid stream into the treatment unit inlet pipe 20, the contaminated liquid can be pumped by the bilge pump 10 through the copolymer sorbent bed 12 which contains a fixed bed of thermoplastic elastomeric block copolymer particles. A treated aqueous liquid which is substantially free of contaminants exits from the copolymer sorbent bed 12 and enters a treatment unit outlet pipe 26 and is directed by a three-way valve 28 into a reservoir inlet pipe 30. A pressure gauge 32 measures the pressure of the treated liquid flowing through the reservoir inlet pipe 30. The bilge pump 10 pumps the treated liquid through the reservoir inlet pipe 30 and into a treated liquid reservoir 34 or back into the bilge 18.

As is conventional in liquid treatment systems comprising parallel treatment units, the copolymer sorbent bed 14 remains in a standby state for use whenever the fixed bed of copolymer particles in the first copolymer sorbent bed 12 is being regenerated. Each copolymer sorbent bed 12, 14 is filled with an amount of block copolymer encapsulant particles (sorbent) sufficient to encapsulate approximately 2 1/2 quarts of liquid organic contaminant. The difference in pressures measured by the pressure gauge 23 and the pressure gauge 32 indicates the amount of pressure drop across the copolymer sorbent bed 12. When the pressure drop across the copolymer sorbent bed 12 is equivalent to encapsulation of about two quarts of contaminant, an appropriate warning can be given to the operator so that the second copolymer sorbent bed 14 can be brought on-line and the fixed bed of particles in the first copolymer sorbent bed 12 regenerated. The second copolymer sorbent bed 14 is brought on-line by turning the three-way valve 24 so that the contaminated organic liquid flows through the treatment unit inlet pipe 22 and not the treatment unit inlet pipe 20. The treated liquid exits from the copolymer sorbent bed 14 into an outlet pipe 36. The three-way valve 28 should be turned so that the treated liquid flowing through the outlet pipe 36 can be directed into the reservoir inlet pipe 30.

Operation of the bilge filtration system in this manner over a period of several months will likely result in substantially no escape of contaminant to the environment. However, if the fixed bed of particles in the copolymer sorbent bed being used is not regenerated at the appropriate time, the bed will likely continue to function until the pressure of the treated liquid in the reservoir inlet pipe 30 is insufficient to maintain proper operation of the bilge pump 10. Such operation can result in significant cavitation in the bilge pump 10.

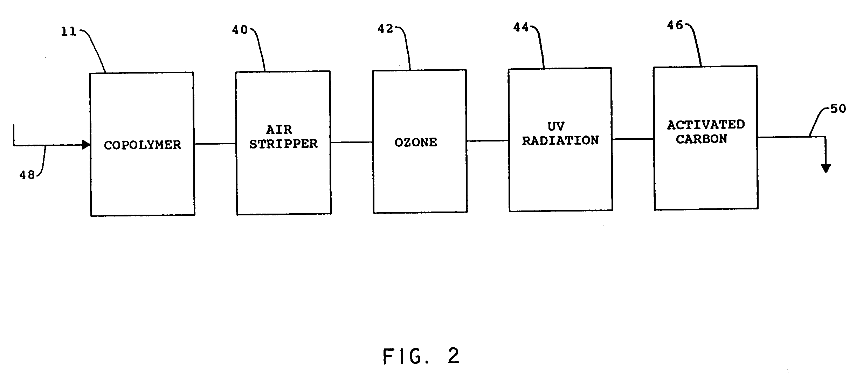

Initial testing data indicate that a plurality of copolymer treatment units 11 like the one shown in FIG. 1 can be placed in series to achieve a continuously high degree of contaminant removal. Alternatively, referring to FIG. 2, a combination system comprising one or more copolymer treatment units 11, one or more air stripper units 40, one or more ozone treatment units 42, one or more ultraviolet (UV) radiation treatment units 44 and one or more activated carbon treatment units 46 placed in series can be used to remove contaminants from an inlet stream 48 and produce a contaminant-free outlet stream 50. Of course, a combination system need not include all of these units and can include any combination of these units. For instance, the ozone treatment unit 42 is preferably used when it is considered desirable to kill bacteria or remove metals from the inlet stream 48. The ultraviolet (UV) radiation treatment unit 44 is also useful for killing bacteria. The decision to use a series of polymer sorbent columns rather than some form of a combination system depends on the nature of the contaminants, the required degree of removal, and the relative cost. For example, if a water stream were contaminated primarily with less volatile compounds, such as xylene, then a polymer-only approach can be attractive from a technical and economic standpoint.

If a combination type system were used to treat a gasoline-contaminated water stream, pretreatment of the stream with a copolymer treatment unit, prior to use of an air stripper unit, can likely result in the removal of a substantial amount of the benzene and toluene, and essentially all of the lower volatility compounds, such as xylene. This will decrease the load on the columns containing activated carbon, thereby increasing the life of the activated carbon. Because a significant reduction in carbon costs can be achieved, the combined treatment approach can likely result in a lower overall treatment cost.

Further, in present commercial treatment systems, activated carbon treatment units are typically used. Activated carbon treatment units constitute approved filter media. However, the activated bed of carbon must be regenerated approximately every day at a substantial cost. When a copolymer treatment unit is placed in series with an activated carbon treatment unit and placed before the activated carbon treatment unit, the carbon in the activated carbon treatment unit needs to be regenerated only about every 1 to 2 weeks. Using this combination treatment system, the copolymer in the copolymer treatment unit needs to be regenerated only about every 3 to 4 days and can be regenerated at a cost which is lower than the regeneration cost for a bed of activated carbon.

The invention also relates to a method for utilizing hydrocarbon fluid which has been recovered from water by encapsulating the hydrocarbon fluid with a thermoplastic rubber block copolymer. In this method, the thermoplastic rubber-encapsulated hydrocarbon fluid is dissolved in a solvent such as petroleum naphtha, gasoline, diesel fuel and crude oil to form a thermoplastic rubber-hydrocarbon fluid-petroleum liquid composition adapted for use as a fuel for furnaces, engines and the like. In other words, during this dissolving step, the thermoplastic rubber is also dissolved by the solvent. The thermoplastic rubber-hydrocarbon fluid-petroleum liquid composition can then be burned in a furnace or used as a fuel in an engine. Preferably, the solvent is heated during the dissolving step to promote the dissolution of the thermoplastic rubber-encapsulated hydrocarbon fluid in the solvent.

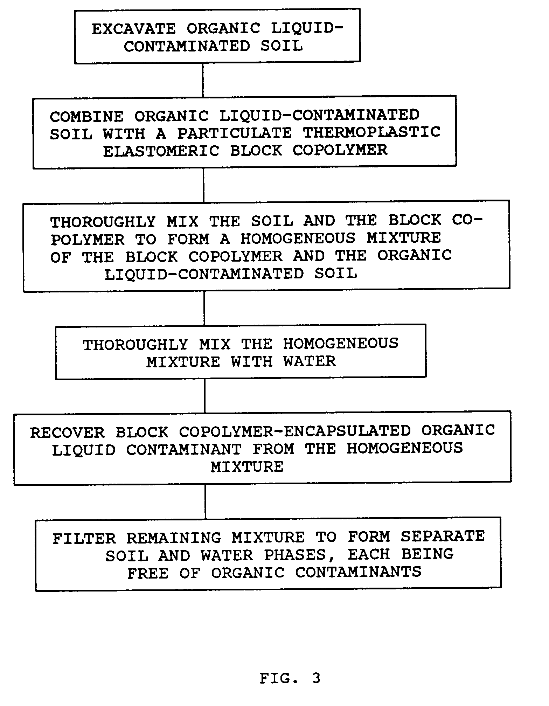

This invention also relates to two processes for recovering organic liquids, particularly hydrocarbons, which have permeated into soil. Referring to FIG. 3, in the first of these processes, the spillate-contaminated soil is excavated and loaded into a blender, such as a ribbon blender. Next, one of the block copolymer encapsulants disclosed above is added to the spillate-contaminated soil in the blender in a weight ratio of about 1:10 to about 1:1, preferably 1:1. It may be advantageous to add an amount of fresh hydrocarbon to the soil and encapsulant in the blender to activate the organic liquid contaminant.

Third, the contaminated soil and block copolymer encapsulant are thoroughly mixed in the blender for a period of time sufficient to permit adsorption and/or absorption of the contaminant by the block copolymer. Mixing time can range from 30 seconds to 2 hours or longer, with 1 to 10 minutes currently being preferred, depending on the nature of the contaminant and the time the contaminant has been in the soil. A homogeneous mixture of soil and contaminant-encapsulated copolymer is then discharged into a holding tank. The contaminant-encapsulated copolymer will be in powder form or in large agglomerated form, depending on the form of the block copolymer used.

Fourth, the copolymer-encapsulated contaminant is leached from the soil with water by mixing the homogeneous mixture with water. Chunks of encapsulated contaminant will then rise to the surface of the water and are removed by skimming, leaving the water and dirt substantially free of organic liquid contaminants. Preferably, the chunks are recovered from the water using a 1/8 inch to 1 inch net. The water and soil are then filtered to obtain a substantially dried soil and a water extract, each being free of organic contaminants.

The copolymer-encapsulated organic liquid contaminant can be economically utilized in a subsequent operation. For instance, the block copolymer-encapsulated contaminant chunks can be liquified by a variety of organic solvents such as petroleum naphtha, gasoline, diesel fuel or crude oil. The resulting organic contaminant-elastomer-organic solvent liquid composition can then be employed as a fuel source for industrial furnaces, engines and the like. Alternately, the solid contaminant-encapsulated copolymer can be used as a solid fuel.

In the second process for recovering organic liquids which have permeated into soil, the spillate-contaminated soil is excavated and thoroughly mixed with water in a blender or other mixing apparatus to leach the contaminant from the soil. Next, this mixture is filtered to obtain a washed soil and an aqueous filtrate comprising entrained or dispersed organic liquids. The filtrate is then directed through a fixed bed of thermoplastic elastomeric copolymer sorbent particles such as the copolymer treatment unit 11 shown in FIG. 1 to thereby remove the organic contaminants from the aqueous stream. If desired, the washed soil can be further treated by treating the soil according to the first process described above for removing contaminants from soil.

The present invention also relates to an application of the thermoplastic elastomeric block copolymer to a liquid spillage on a solid surface such as steel decking, wood decking, concrete flooring or the like by manually broadcasting or otherwise spreading the block copolymer encapsulant uniformly over the surface of the spill.

The amount of block copolymer utilized will depend in part upon the thickness of the organic liquid film to be absorbed and/or adsorbed and the time needed for economic collection of the liquid. When the liquid spillage comprises a film of not more than about 0.5 inch in thickness, it is preferred that the block copolymer be applied in an amount between about 0.1 to 1 pounds per gallon of spill. The time required for encapsulation of the organic liquid by the block copolymer will vary with the temperature, the ratio of organic liquid to block copolymer, the viscosity of the organic liquid, the surface area of the block copolymer being utilized, and the time the organic liquid has been in the soil or on the surface.

The block copolymer encapsulant begins to encapsulate a liquid hydrocarbon spill within seconds following contact of fresh encapsulate with the liquid spill. The overall time required for cleanup of spills of one-half inch or less film thickness will usually be measured in minutes. The spilled organic or petroleum-based liquid is substantially completely encapsulated within the body of the block copolymer, leaving the surface of the block copolymer encapsulant essentially dry (non-oily), non-tacky and non-toxic. This facilitates the collection of the encapsulated organic liquid and block copolymer by means such as raking, sweeping and the like.

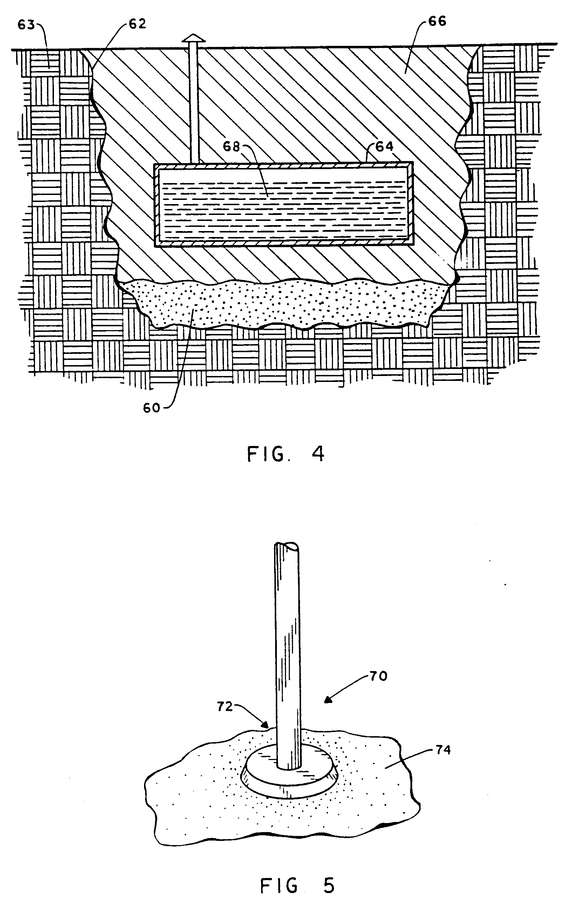

Referring to FIG. 4, the invention also relates to a method for preventing organic contaminants from leaching from an underground fuel tank into an existing soil beneath the fuel tank. In the method, a soil/block copolymer mixture 60 is prepared by thoroughly mixing a first quantity of soil and one of the block copolymers described above. Next, the soil/block copolymer mixture 60 is placed at the bottom of an excavated hole 62 in an existing soil 63. Then, an underground fuel tank 64 is suitably positioned above the soil/block copolymer mixture 60, and a second quantity of soil 66 is used to fill in the excavated hole 62.

If and when organic fluids 68 ever leak from the underground fuel tank 64, they will likely migrate downwardly through the second quantity of soil 66 and be absorbed and/or adsorbed by the block copolymer in the soil/block copolymer mixture 60. If desired, the soil/block copolymer mixture 60 can be placed directly below the tank 64 so that any leaking organic fluids from the tank 64 can migrate directly into the soil/block copolymer mixture 60. Thus, this method prevents the leaching of organic fluids 68 from the underground fuel tank 64 into the existing soil 63 beneath the underground fuel tank 64.

Similarly, referring to FIG. 5, the invention relates to a method for preventing organic contaminants which leak or spill from a wellhead 72 of an oil well 70 from leaching into an existing soil around the wellhead 72. In the method, the wellhead 72 is surrounded by a ring 74 of the soil/block copolymer mixture described above. Leakage and spillage of oil and other organic contaminants from the oil well 70 at the wellhead 72 is recovered because the block copolymer of the soil/block copolymer mixture absorbs and/or adsorbs the contaminants as they leak or spill from the wellhead 72. This prevents any leaching of such contaminants into the soil in the area around the wellhead 72. If desired, the area around the wellhead 72 can be excavated to a desired depth and filled in with the soil/block copolymer mixture. In other words, the ring 74 of the soil/block copolymer mixture can have any desired depth.

The invention is further illustrated by the following examples:

Example 1

A single, 0.5 inch diameter fixed bed sorption column was loaded to a depth of about 30" with PS 3200 sorbent (a block copolymer sold by Micro Environmental, Inc. of Grand Rapids, Michigan, USA) in the form of a powder (having a volume of about 100 mL). Gasoline contaminated water (about 0.6 grams of Amoco Silver grade unleaded gasoline per liter of solution) was then passed through the column at a rate of 12 bed volumes (BV) per hour, where BV is defined as a volume equal to the volume of block copolymer in the column (i.e., 100 mL). Thus, the feed rate was 1.2 L/hr.

The percentages of component removal of the effluent stream relative to the untreated stream after 1 2/3, 3 1/3, 6 2/3, 10, and 13 1/3 hours of operation of the column were measured according to EPA Method 602 (VOA) and are listed below:

| Contaminant | % Component Removal | | | | |
|---|---|---|---|---|---|
| | 1 2/3 hr | 3 1/3 hr | 6 2/3 hr | 10 hr | 13 1/3 |
| MTBE | 31.6 | 59.6 | 33.0 | 41.6 | 13.4 |
| Benzene | 99.4 | 93.1 | 76.9 | 81.4 | 79.0 |
| Toluene | 100.0 | 100.0 | 99.5 | 96.6 | 91.7 |
| Ethylbenzene | 100.0 | 100.0 | 100.0 | 100.0 | 100.0 |
| Xylenes | 100.0 | 100.0 | 100.0 | 100.0 | 100.0 |

As expected, the more volatile components, benzene and toluene, broke through the column faster. During the test, there was no indication of any pressure drop build-up across the column. Further, no fusing or "melting" (reaction of the gasoline with the block copolymer as opposed to absorption and/or adsorption) of the block copolymer was noticed. Thus, the sorbent responded physically in a manner similar to that observed in other adsorption-type column systems.

Example 2

The procedure of Example 1 was repeated except that the sorption column was loaded with PS 3400 sorbent (a block copolymer sold by Micro Environmental, Inc. of Grand Rapids, Michigan, USA) rather than PS 3200 sorbent. However, because initial testing of the effluent indicated that breakthrough of the volatile organic compounds (benzene, toluene, ethylbenzene and xylenes) occurred fairly soon, compared to the use of PS 3200 in Example 1, testing was terminated after 3 1/3 hours.

The percentages of component removal of the effluent stream relative to the untreated stream after 1 2/3 and 3 1/3 hours of operation of the column were measured and are listed below. As the results indicate, the PS 3200 used in Example 1 was a more effective sorbent than PS 3400.

| Contaminant | % Component Removal | |
|---|---|---|
| | 1 2/3 hr | 3 1/3 hr |
| MTBE | 19.0 | 28.8 |
| Benzene | 84.5 | 83.6 |
| Toluene | 93.8 | 94.0 |
| Ethylbenzene | 97.1 | 97.5 |
| Xylenes | 96.7 | 97.1 |

Example 3

In order to determine the efficiency of PS 3200 and PS 3400 in removing gasoline from water in a single stage, batch contact system, the ultimate adsorption and/or absorption capacity of each of these block copolymers was first determined. Since it was found that these block copolymers tend to fuse or melt when contacted with concentrated gasoline solutions, the following procedure was employed to determine the ultimate capacity:

a) A specific amount of gasoline was added to a weighed excess of polymer and permitted to react for several hours;

b) The block copolymer which had reacted with the gasoline and thus had fused or melted was removed and the unreacted block copolymer was weighed; and

c) The weight of the unreacted block copolymer was subtracted from the overall weight of the block copolymer to determine the weight of the block copolymer which had reacted (fused or melted).

The results for the capacity tests were as follows:

| Material | Grams Gasoline | Grams Reacted Polymer | Capacity (g gasoline/g polymer) |
|---|---|---|---|
| PS 3200 | 5.0 | 4.8 | 1.04 |
| PS 3400 | 5.0 | 4.0 | 1.25 |

The PS 3400 material adsorbs a larger amount of gasoline, for a specific sorbent weight, than the PS 3200 material. During this testing, it was observed that the PS 3400 material seemed to "melt" to a greater extent than the PS 3200. This may provide some explanation for the superiority of PS 3200 in column-type approaches, wherein the sorbent is not moved and it is desirable to have minimal fusion to avoid the potential for bed pluggage or liquid channeling.

After determining the ultimate capacity of the sorbent, a single stage, batch isotherm, contact between sorbent and contaminated water was carried out as follows. First, distilled water was contaminated with Amoco Silver grade unleaded gasoline to create two separate containers of 2 Liter solutions, each having a concentration of 0.6 grams of gasoline per Liter of solution. Second, a first dosage of sorbent (in the form of a powder) equal to the amount required to recover all of the gasoline at 100% adsorption efficiency (For PS 3200 sorbent, this was computed to be 0.6 g/L) was added to the first 2 Liter solution. A second dosage of sorbent equal to twice the first dosage was added to the second 2 Liter solution.

Each sample was then mixed in a rotating tumbler for about 16 hours. After mixing, a sample of water was removed from each container and analyzed by EPA Method 602 (VOA) for "BETX" contaminants. The percentages of component removal are shown below:

| Contaminant | % Component Removal | |
|---|---|---|
| | Polymer Dose 1 (0.6 g/L) | Polymer Dose 2 (1.2 g/L) |
| Benzene | 27.8 | 33.6 |
| Toluene | 46.5 | 50.4 |
| Ethylbenzene | 62.8 | 66.4 |
| Xylenes | 65.5 | 68.5 |

Example 4

The procedure of Example 3 was repeated except PS 3400 sorbent was used rather than PS 3200 sorbent. Also, the first dosage of sorbent was equal to the amount required to recover all of the gasoline at 100% adsorption efficiency (For PS 3400 sorbent, this was computed to be 0.5 g/L) was added to the first 2 Liter solution of gasoline-contaminated water. A second dosage of sorbent equal to twice the first dosage was added to the second 2 Liter solution of gasoline-contaminated water. After mixing of the samples, the containers were removed from the mixing tumbler and analyzed for contaminant removal. The percentages of component removal are shown below:

| Contaminant | % Component Removal | |
|---|---|---|
| | Polymer Dose 1 (0.5 g/L) | Polymer Dose 2 (1.0 g/L) |
| Benzene | 20.8 | 24.2 |
| Toluene | 37.4 | 43.2 |
| Ethylbenzene | 54.9 | 60.7 |
| Xylenes | 58.2 | 63.4 |

Upon examining the effectiveness of the sorbents in the single stage batch contact approaches in Examples 3 and 4, it can be seen that both the PS 3200 and PS 3400 sorbents remove a portion of the gasoline components, with the PS 3200 sorbent being the more efficient sorbent. Second, the results indicate that doubling the dosage of sorbent did not provide a substantial increase in gasoline contaminant removal. Third, the single stage batch contact approaches of Examples 3 and 4 clearly are not as effective in removing gasoline components from an aqueous solution as are the column contact approaches of Examples 1 and 2.

Example 5

The procedure of Example 1 can be scaled up by using a modified 55 gallon drum having inlet and outlet distribution headers. The column can be filled with about 50 gallons of PS 3200 sorbent (about 140 pounds). The scaled up flow rate (based on the rate tested in Example 1 of 12 BV/hr) would be about 10 gallons per minute. The expected pressure drop across the column would be less than 3 psig.

Example 6

A one half cup of unleaded gasoline is spilled onto a garage floor. A block copolymer encapsulant (PS 3400) can be sprinkled over the surface of the spill. The gasoline spill can likely be encapsulated within about 15 seconds.

Example 7

The procedure of Example 6 is repeated, except that a 10-W-30 motor oil is used in place of the unleaded gasoline. Substantially similar results can likely be obtained.

Example 8

One hundred grams of uncontaminated soil (IR confirmed) were mixed with 10 grams of #2 diesel fuel to form a contaminated soil sample. Ten grams of PS 3200 sorbent were then mixed with the contaminated soil sample for 30 minutes to form a homogeneous composition. The homogeneous composition was then leached with 1 liter of deionized water by mixing the homogeneous composition and the water for 2 hours. Upon completion of the leaching step, chunks of encapsulated contaminant rose to the surface of the water and were removed by skimming the surface of the water with a net. The remainder of the sample was then filtered. The filtration extract was suitably analyzed for volatile organic contaminants (benzene, toluene, ethylbenzene and xylenes) in a gas chromatograph equipped with an FID detector. The filtration extract was found to have no detectable volatile organic contaminants. Therefore, no volatile organic contaminant was present in an amount exceeding 10 parts per billion.

Example 9

The procedure of Example 8 was repeated except that the contaminated soil sample and the sorbent were mixed for 2 hours rather than 30 minutes. The same results were observed.

Example 10

Twenty gallons of topsoil contaminated with two gallons of unleaded gasoline is fed to a ribbon blender. Approximately 3 gallons of the encapsulant of Example 1 is blended with the contaminated topsoil to a substantially homogeneous composition which is discharged to a 100-gallon holding tank. The homogeneous composition is blended with 50 gallons of tap water. Chunks of encapsulated contaminant rise to the surface of the water in the holding tank and are removed by skimming with a leaf rake. The water and dirt which remain in the tank can be subsequently tested and will likely be substantially free of unleaded gasoline.

Example 11

In this experiment, seawater was placed into the glass vessel and an amount of Kuwait crude sufficient to provide a 1/2-inch thick film was poured onto the seawater. The solid hydrophobic silica (Aerosil R974) treated block copolymer (Kraton G-1650) was scattered on the surface of the crude oil to a thickness of about 1/8-inch, and stirred into the crude oil film. The oil was completely encapsulated by the block copolymer composition of the invention in less than one minute to form a dry solid floating on the surface of the seawater. The solid was readily removed from the surface of the seawater as a dry solid which left no oily residue on the hands. The seawater, after separation of the dry solid, was clear with no residue of the crude oil. A similar treatment of Kuwait crude oil film with untreated Kraton G-1650 block copolymer required approximately 1-1/2 minutes to encapsulate the oil spill.

Example 12

The procedure of Example 11 was repeated, except that fresh water was used in place of seawater. Substantially the same results were obtained.

12

Example 13

The procedure of Example 12 was repeated, except that unleaded gasoline was used in place of Kuwait crude oil. Substantially the same results were observed.

Example 14

The procedure of Example 12 was again repeated, except that a 10-W-30 lubricating oil was employed in place of Kuwait crude. Substantially the same results were noted, with the water being entire free after treatment with the invention encapsulant.

Example 15

The procedure of Example 12 was again repeated with each of the following being used in place of Kuwait crude oil: diesel fuel, heptane, seal oil, transformer fluid, JP-5 jet fuel, hydraulic fluid and transmission fluid. In each instance, substantially the same results were obtained, with the water being substantially free of the hydrocarbon contaminant. In all cases, the hydrocarbon was encapsulated about 25 percent more rapidly by the invention compositions than by the untreated control.

Example 16

A 32-foot boat equipped with twin inboard diesel engines with 20-30 gallon bilge tanks is treated with a bilge bag having a circumference of approximately 4" and a length of about 48" filled with the invention composition of Example 11. The bag is effective in removing two quarts of contaminating oil before requiring replacement. While in use, the bilge bag keeps the water in the bilge substantially free of oil contaminants.

Example 17

A diesel oil slick approximately 1/4 acre in area and approximately 1/4-inch was formed on the surface of a small inland lake. The shoreline was protected from the slick by the use of a flow-through boom in which individual boom members were filled with the invention composition of Example 11, with the boom being positioned between the shoreline and the oil slick. The edge of the slick towards the shoreline was treated first by spraying the invention composition of Example 11 from a small boat which then proceeded around the slick spraying the invention composition from the edge towards the center. The treatment amount was approximately 20 percent by weight, based on the calculated amount of the spill. Substantially complete encapsulation was obtained within 4 hours. The encapsulated fragments were recovered from the water by skimming using a 1/8-inch net. The recovered fragments were dissolved in petroleum naphtha to form a liquid diesel-oil-rubber petroleum naphtha composition. The composition was packaged into 55-gallon steel drums and subsequently used as fuel for an industrial hot water furnace.

Example 18

In this example, a bilge pump is equipped with parallel filter cartridges with appropriate piping and valving to employ one in-line filter for removal of contaminant from the bilge water, with the second filter being in a standby state for use while the first filter is being refurbished. Each filter cartridge is filled with the invention encapsulant of Example 11, in an amount sufficient to encapsulate approximately 2-1/2 quarts of contaminating hydrocarbons. When the pressure drop across the filter is equivalent to encapsulation of about two quarts of contaminant, an appropriate warning is given so that the second filter may be brought on-line and the first filter cleaned. If the filter is not changed in time, the filter will continue to operate until the pressure drop will automatically stop the bilge pump from further operation. Operation of the bilge pump filtration system in this manner over a period of approximately six months resulted in substantially no escape of contaminant to the environment.

The invention thus provides highly effective processes for recovering organic or petroleum-based liquids from soil, aqueous streams and solid surfaces. The block copolymers used in the processes can quickly absorb and/or adsorb spilled organic or petroleum-based liquids. After the organic or petroleum-based liquids have been absorbed and/or adsorbed, the organic liquid-encapsulated block copolymers can be easily recovered, leaving little, if any, trace of the spilled organic or petroleum-based liquids. The recovered copolymers containing the recovered organic liquids can be further used as solid fuel or dissolved in a variety of liquid fuels to form a fuel oil, thus avoiding costly landfill or disposal problems. Further, the encapsulation of the organic liquid in the copolymer raises the flash temperature (lowers the flash point) of the organic liquid.

Reasonable variation and modification are possible within the scope of the foregoing specification and drawings without departing from the spirit of the invention.

Parts List

| | |
|---|---|
| 10 | bilge pump |
| 11 | copolymer treatment unit |
| 12 | copolymer sorbent bed |
| 14 | copolymer sorbent bed |
| 16 | bilge outlet pipe |
| 18 | bilge |
| 20 | treatment unit inlet pipe |
| 22 | treatment unit inlet pipe |
| 23 | pressure gauge |
| 24 | three-way valve |
| 26 | treatment unit outlet pipe |
| 28 | three-way valve |
| 30 | reservoir inlet pipe |
| 32 | pressure gauge |
| 34 | treated liquid reservoir |
| 36 | cartridge outlet pipe |
| 40 | air stripper unit |
| 42 | ozone treatment unit |
| 44 | ultraviolet (UV) radiation treatment unit |
| 46 | activated carbon treatment unit |
| 48 | inlet stream |
| 50 | outlet stream |
| 60 | soil/block copolymer mixture |
| 62 | excavated hole |
| 63 | existing soil |
| 64 | underground fuel tank |
| 66 | second quantity of soil |
| 68 | organic fluids |
| 70 | oil well |
| 72 | wellhead |
| 74 | ring |

**Claims**

1. A method for removing organic liquid contaminant from an aqueous solution in which the contaminant is entrained which comprises passing the solution through a contacting zone containing a fixed bed of at least one of a particulate thermoplastic elastomeric linear diblock copolymer, triblock copolymer and branched diblock copolymer, the particulate thermoplastic elastomeric block copolymer comprising at least one of a monovinyl aromatic polymer block joined to an elastomeric conjugated diene polymer block, and a monovinyl aromatic polymer block joined to an elastomeric monoolefinic polymer block; and recovering a substantially contaminant-free aqueous stream from the contacting zone.

2. A method for removing organic liquid contaminant from soil comprising:
    combining organic liquid-contaminated soil with at least one of a particulate thermoplastic elastomeric linear diblock copolymer, triblock copolymer, and branched diblock copolymer, the particulate thermoplastic elastomeric block copolymer comprising one of a monovinyl aromatic polymer block joined to an elastomeric conjugated diene polymer block, and a monovinyl aromatic polymer block joined to an elastomeric monoolefinic polymer block;
    mixing the organic liquid-contaminated soil and the thermoplastic elastomeric block copolymer to

14

form a homogeneous mixture of the thermoplastic elastomeric block copolymer and the organic liquid-contaminated soil;

mixing the homogeneous mixture with water;

recovering block copolymer-encapsulated organic liquid contaminant from the homogeneous mixture; and

recovering contaminant-free soil from the remaining mixture.

3. A method for recovering an organic liquid film from a liquid or solid surface comprising:

uniformly distributing over the organic liquid film a finely divided thermoplastic elastomeric block copolymer comprising one of a linear diblock copolymer, triblock copolymer, and branched diblock copolymer, the particulate thermoplastic elastomeric block copolymer comprising one of a monovinyl aromatic polymer block joined to an elastomeric conjugated diene polymer block, and a monovinyl aromatic polymer block joined to an elastomeric monoolefinic polymer block; wherein said block copolymer is uniformly coated with hydrophobic silica in an amount in the range of 0.1 to 2.5 weight percent based on the weight of the thermoplastic block copolymer;

encapsulating the oil in the block copolymer; and

recovering organic liquid-encapsulated block copolymer from the liquid or solid surface.

4. A method for removing an organic liquid contaminant from soil comprising:

mixing organic liquid-contaminated soil with water to leach the organic liquid contaminant from the soil and to obtain a soil/liquid mixture;

filtering the soil/liquid mixture to obtain a washed soil and an aqueous filtrate, the filtrate comprising organic liquid contaminants;

passing the aqueous filtrate through a contacting zone containing a fixed bed of at least one of a particulate thermoplastic elastomeric linear diblock copolymer, triblock copolymer and branched diblock copolymer, the particulate thermoplastic elastomeric block copolymer comprising at least one of a monovinyl aromatic polymer block joined to an elastomeric conjugated diene polymer block, and a monovinyl aromatic polymer block joined to an elastomeric monoolefinic polymer block; and

recovering a substantially contaminant-free aqueous stream from the contacting zone.

5. A method for preventing organic contaminants from leaking from a contaminant containing tank or pipe into soil beneath or surrounding the tank or pipe, the method comprising:

mixing a quantity of soil and a particulate thermoplastic elastomeric linear diblock copolymer, triblock copolymer and branched diblock copolymer, the particulate thermoplastic elastomeric block copolymer comprising at least one of a monovinyl aromatic polymer block joined to an elastomeric conjugated diene polymer block, and a monovinyl aromatic polymer block joined to an elastomeric monoolefinic polymer block to form a soil/block copolymer mixture; and

placing the soil/block copolymer mixture around or beneath the tank or pipe in the ground.

6. A method according to claim 5 and further comprising the steps of recovering the mixture of soil and copolymer from the ground after contamination by the organic contaminants; and separating the contaminant containing copolymer from the soil.

7. The method of any of claims 1-6 wherein the elastomeric polymer block is at least partially hydrogenated.

8. The method of any of claims 1-6 wherein the monovinyl aromatic polymer block is at least partially hydrogenated.

9. The method of any of claims 1-7 wherein the thermoplastic elastomeric block copolymer comprises a polystyrene-polybutadiene-polystyrene block copolymer.

10. The method of any of claims 1-9 wherein the thermoplastic elastomeric block copolymer comprises polystyrene-ethylene/butylene copolymer-polystyrene block copolymer.

11. The method according to any of claims 1-10 and further including the step of dissolving the block copolymer-encapsulated organic liquid contaminant in an organic solvent to form an organic liquid contaminant-copolymer liquid composition to provide a liquid composition as a fuel for furnaces, engines and the like.

12. The method of claim 11 wherein the organic solvent is selected from the group consisting of petroleum naphtha diesel fuel, crude oil and gasoline.

13. The method of claim 3 wherein the amount of block copolymer applied ranges from about 0.1 to about 1 pounds per gallon of the organic liquid.

14. The method of claim 1 and further comprising the step of treating the solution with ozone.

15. The method of claim 1 and further comprising the step of treating the solution with ultraviolet radiation.

16. The method of claim 1 and further comprising the step of treating the solution with activated carbon.

17. The method of claim 1 and further comprising the step of passing the solution through an air stripper.

FIG. 1

FIG. 2

EXCAVATE ORGANIC LIQUID-
CONTAMINATED SOIL

COMBINE ORGANIC LIQUID-CONTAMINATED
SOIL WITH A PARTICULATE THERMOPLASTIC
ELASTOMERIC BLOCK COPOLYMER

THOROUGHLY MIX THE SOIL AND THE BLOCK CO-
POLYMER TO FORM A HOMOGENEOUS MIXTURE
OF THE BLOCK COPOLYMER AND THE ORGANIC
LIQUID-CONTAMINATED SOIL

THOROUGHLY MIX THE HOMOGENEOUS
MIXTURE WITH WATER

RECOVER BLOCK COPOLYMER-ENCAPSULATED ORGANIC
LIQUID CONTAMINANT FROM THE HOMOGENEOUS
MIXTURE

FILTER REMAINING MIXTURE TO FORM SEPARATE
SOIL AND WATER PHASES, EACH BEING
FREE OF ORGANIC CONTAMINANTS

FIG. 3

FIG. 4

FIG 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | US-A-4 941 978 (GABRICK) <br><br> * claims 1,2,6; examples 1,7 * <br> * column 3, line 6 - line 48 * <br> --- | 1,2,3, 7-10 | C09K3/32 <br> C02F1/68 <br> B01D17/02 |
| Y | DE-A-3 122 219 (ASAHI KASEI KOGYO) <br><br> * abstract; claims 1,5,6 * <br> --- | 1,2,3, 7-10 | |
| A,D | US-A-3 518 183 (EVANS) <br> * column 3, line 56 - column 4, line 43; claims 1,3 * <br> --- | 1-17 | |
| A | US-A-3 923 472 (MARTINEZ) <br> * abstract; claims 1,5,8; figure * <br> --- | 1-17 | |
| P,A | EP-A-0 484 061 (THE BRITISH PETROLEUM COMPANY) <br> * the whole document * <br><br> ----- | 1-17 | |

| | |
|---|---|
| | TECHNICAL FIELDS SEARCHED (Int. Cl.5 ) <br><br> C09K <br> C02F <br> B01D |

The present search report has been drawn up for all claims

| Place of search | Date of completion of the search | Examiner |
|---|---|---|
| THE HAGUE | 01 SEPTEMBER 1992 | NICOLAS H.J.F. |

EPO FORM 1503 03.82 (P0401)